# EUROPEAN PATENT SPECIFICATION

(11) **EP 3 100 008 B1**
(45) Date of publication and mention of the grant of the patent: **22.11.2017**
(21) Application number: 15701421.8
(22) Date of filing: 26.01.2015
(51) Int. Cl.: G01D 11/24, G01D 11/30, G01D 5/353

(54) **A METHOD AND APPARATUS FOR A STRUCTURAL MONITORING DEVICE ADAPTED TO BE LOCATABLE WITHIN A TUBULAR STRUCTURE**
VERFAHREN UND VORRICHTUNG FÜR EINE STRUKTURÜBERWACHUNGSVORRICHTUNG ZUR LOKALISIERBARKEIT IN EINER RÖHRENFÖRMIGEN STRUKTUR
PROCÉDÉ ET APPAREIL POUR UN DISPOSITIF DE SURVEILLANCE STRUCTURELLE CONÇU POUR POUVOIR ÊTRE POSITIONNÉ DANS UNE STRUCTURE TUBULAIRE

(30) Priority: 27.01.2014 GB 201401379
(43) Date of publication of application: 07.12.2016
(73) Proprietor: Epsilon Optics Aerospace Limited, Fordingbridge, Hampshire SP6 1QX (GB)
(72) Inventor: CAESLEY, Roger Charles, Fordingbridge, Hampshire SP6 1QX (GB)
(74) Representative: ip21 Ltd
(86) International application number: PCT/GB2015/050172
(87) International publication number: WO 2015/110839

(56) References cited:
- WO-A1-2008/047171
- GB-A- 2 435 689
- GB-A- 2 458 955
- US-A1- 2006 001 863
- US-A1- 2009 287 092

## Description

### Field of the Invention

The invention relates to a method and apparatus for a structural monitoring device adapted to be locatable within a tubular structure; and in particular, but not exclusively, for the use in tubular structures such as an axle.

### Background to the Invention

There is an interest in measuring the loads applied to cantilever tubular structures, such as axles in order to determine whether an overload has occurred. Also, there are applications where information on when the load is first applied or removed from the axle, is required. The load data can also be used for fatigue analysis to help to determine the remaining lifetime of the monitored structure. GB2435689 discloses a known monitoring device adapted to be located within a tubular structure. Known methods and apparatus employ the use of resistive strain gauges which are located within the monitored tubular structure for sensing external loads and subsequently determining the lifetime of the structure. The disadvantages of these known methods and apparatus are:
- Permanently fixing the resistive strain gauges to the inner surface of the tube;
- In some applications, the installation or removal of the resistive strain gauges will require the dismantling of the tubular structure incorporating the monitored tubular structure or the dismantling of the whole structure itself.
- The installation and removal of the resistive strain gauges if often difficult and time consuming, as well as being invasive to the structural monitoring device itself, which can be damaged especially upon its removal from the monitored tube.
- Resistive strain gauges are inherently unstable and are prone to drift with age; therefore the resistive strain gauges will require a re-calibration during their life cycle.
- Furthermore complicated control/monitoring circuitry may be required to offset the drifting of the resistive strain gauges when calibration may not be possible (i.e.) when it is impossible to gain access to the resistive strain gauges due to its location (i.e.) deep sea or other remote hostile locations.

It is an objective of the invention to address at least some of these disadvantages.

### Summary of the Invention

In a first broad independent aspect, the invention provides a structural monitoring device adapted to be locatable within a tubular structure, the monitoring device comprising a plurality of supporting arms for supporting a plurality of fibre optic strain sensors; whereby each said supporting arm is arranged to support each said fibre optic strain sensor adjacent to an inner surface of the circumference of a monitored tubular structure to provide information indicative of strain sensed along a first radial axis and information indicative of strain sensed along a second radial axis, characterised in that said strain information of said first and second radial axes are employed to monitor a force external to the circumference of a tubular structure characterised in that said plurality of supporting arms further comprises a first supporting arm intersecting a second supporting arm to form a body arranged in a cruciform configuration, whereby said first supporting arm supports said plurality of fibre optic strain sensors along said first axis and said second supporting arms supports said plurality of optic strain sensors along said second axis; and wherein said first arm further comprises a first said fibre optic sensor at one end and a second fibre optic sensor at a second end; and said second arm further comprises a third said fibre optic sensor at one end and a fourth said fibre optic sensor at a second end.

This configuration enables the monitoring of one or more loads applied to the circumference of the monitored tubular structure. Therefore as the monitored tubular structure bends, the contained structural monitoring device bends accordingly too. The strain information generated from the monitored first and second axes is then subsequently processed to determine the both the magnitude and direction of the external loads applied to the monitored tube.

As specified above, said plurality of supporting arms further comprises a first supporting arm intersecting a second supporting arm to form a body arranged in a cruciform configuration, whereby said first supporting arm supports said plurality of fibre optic strain sensors along said first axis and said second supporting arm supports said plurality of optic strain sensors along said second axis.

This configuration enables the structural monitoring device to monitor of one or more radial loads applied to the circumference of the monitored tubular structure. The intersecting arms form a cruciform configuration, whereby each arm is positioned to, or approximately to, 90 degrees from a neighbouring arm. The 90 degree spacing of the neighbouring arms facilitates the monitoring of one or more loads about the circumference of the monitored tubular structure, via the monitored two axes.

As specified above, said first arm further comprises a first said fibre optic sensor at one end and a second fibre optic sensor at a second end; and said second arm further comprises a third said fibre optic sensor at one end and fourth said fibre optic sensor at a second end.

This configuration enables both supporting arms to extend diametrically across the inner cavity of the monitored tubular structure, and thereby supporting an upper and lower strain gauge against the inner surface of the monitored tubular structure, along each monitored axis. Therefore, when the monitored tubular structure flexes under an applied external load along a monitored axis, the upper strain gauge will sense a compressive force, while the associated lower strain gauge will sense a tensile force (or vice versa), the difference between the two is utilised to calculate the applied external load. The information generated by these four optical strain sensors, along the two monitored axes, is processed to determine both magnitude and direction of the external load applied to the tube.

Preferably, each said supporting arm is of an elongate configuration, which in use extends along the inner bore of a monitored tubular structure. This configuration determines the length of the monitored tubular structure to be monitored by the structural monitoring device.

Preferably, said plurality of supporting arms is formed from a flexible material.

This configuration enables the supporting arms to flex in response to the bending of the monitored tubular structure. Preferably, each said fibre optic sensor is of an elongate configuration, which in use extends along the inner bore of a monitored tubular structure.

This configuration enables the sensing of one or more loads applied to the elongated fibre optic sensors, which extend along the inner bore of a monitored tubular structure.

Preferably, said plurality of fibre optic strain sensors is a plurality of Fibre Bragg Gratings (FBG) optical sensors.

This configuration provides an array of FBG optical sensors which provide a linear output and are therefore not susceptible to Poisson's Ration Affect and therefore there is no cross coupling between the loads on different axes. Furthermore, as FBG sensors have a wavelength to strain relationship that is not subject to variations with age and therefore the FBG sensors do not require recalibration.

Preferably, said FBG optical sensor further comprises a tunable adjustment means for varying the relationship between the change of wavelength and the strain applied to the tubular structure.

The advantage of this configuration is that by adjusting the FBG's wavelength at zero load, the measurable range can be adjusted. Therefore, the FBG optical sensors which are predominantly in compression have a longer zero wavelength than the FBG optical sensors that are in tension.

Preferably, a structural monitoring device adapted to be locatable within a tubular structure, further comprising a plurality of stiffening members for stiffening said plurality of supporting arms, whereby a first and second stiffening body are arranged either side of each said supporting arm.

This configuration enables the strain sensing of the structural monitoring device to be increased so that any bending of the structural monitoring device is focused into an area of a supported fibre optic strain sensor.

Preferably a structural monitoring device adapted to be locatable within a tubular structure, further comprising a plurality of clamping members for attaching said plurality of supporting arms to the inside surface of a monitored tubular structure.

This configuration enables the supporting arms of the structural monitoring device to be retained with monitored tubular structure.

Further preferably, each said clamping member further comprises cooperating wedges, which when adjusted expand outwards.

This configuration provides a tension within the structural monitoring device, which prevents a compressed supporting arm from buckling. Any buckling of a supporting arm will result with the structural monitoring device providing erroneous readings.

Furthermore, the expandable wedges of this configuration facilitate the easy fitting or removal of the structural monitoring device without any impact on the device itself.

A structural monitoring device adapted to be locatable within a tubular structure, further comprising an outside diameter within the range of 1 to 3 inches (2.54 - 7.62 cm). This configuration enables the structural monitoring device to be fitted within a tube structure of a helicopter or other flying vehicle.

Preferably, a tubular structure comprises a structural monitoring device according to any of the above features.

This configuration provides a tubular structure, such as an axle, a structural supporting device or the like, which is provided with the structural monitoring device incorporated within it.

In a second broad independent aspect, the invention provides a method of structural monitoring of a tubular structure characterised by providing a structural monitoring device according to any of the above features and supporting a plurality of fibre optic strain sensors via a plurality of supporting arms whereby each said fibre optic strain sensor is parallel to an inner surface of a monitored tubular structure; and provides information indicative of strain sensed along a first axis and information indicative of strain sensed along a second axis.

This method enables the structural monitoring of a tubular structure, by employing the structural monitoring device according to the above features.

Preferably, the method of structural monitoring of a tubular structure further comprises the step of attaching a tool to said device for aligning said device within a monitored tubular structure.

When attached to the structural monitoring device, the tool is attached to the cruciform and the associated retaining clamping bolts, which enables the device to be rotated and aligned within the monitored tubular structure, to ensure the correct positioning of the device.

Preferably, the method of structural monitoring of a tubular structure, further comprises the step of positioning said device so that a said optic strain sensor is aligned to be parallel to load applied to a monitored tubular structure.

The structural monitoring device is aligned so one of the supporting arms is aligned in accordance with one or more loads applied to the circumference of the monitored tubular structure. Therefore, the optical strain sensors are held on a supporting arm, along an axis which is aligned to sense a radial load applied to the circumference of the monitored tubular structure.

Preferably, said strain information of said first and second axes are employed to monitor an external force to the circumference of a tubular structure.

### Brief Description of the Figures

Figure 1 is a cross-sectional view, along A-A of Figure 3, of the structural monitoring device;
Figure 2 shows a side view of the structural monitoring device along with the clamping wedges;
Figure 3 shows an end view of the structural monitoring device;. and
Figure 4 shows a perspective view of the structural monitoring device located within a monitored tubular structure.

### Detailed Description of the Figures

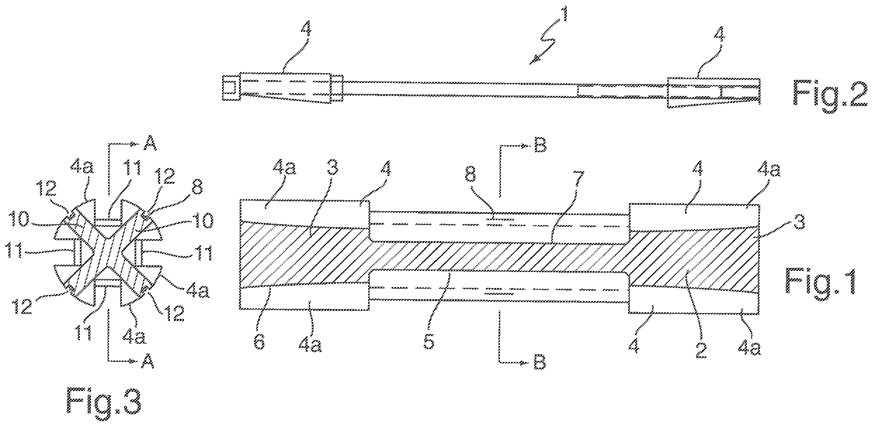

Figure 1 shows a cross-sectional view of the structural monitoring device generally indicated by arrow 1. The monitoring device comprises a sensor carrier body 2 which is centrally located within the device 1 and extends end to end along a horizontal axis A-A (see Figure 3). The monitoring device 1 comprises a generally cylindrical body which comprises two cylindrical end portions 4 that comprise an outside diameter which is larger than the outside diameter of the cylindrical middle portion 5. The end portions 4 and the middle portion 5 of the monitoring device 1 have constant diameters, which are horizontally linear along each portions length (4,5).

The end portions 4 of the monitoring device 1 further comprise clamping wedge portions 4a each of which incorporates an inclined surface that is inclined from the outer end face of each end portion 4 towards the inner end face of each end portion 4; thereby forming a wedge that co-operates with the declined end portions 3 of the sensor carrier 2. Each declined end portion 3 comprises an outer surface, which is declined from the outer end face of the sensor carrier 2 towards the inner end face of each end portion 3; thereby forming a second inverted wedge. The second inverted wedges of the sensor carrier 2 cooperate with the wedges formed within each end portions 4 of the monitoring device.1. Therefore when adjusted via an adjustment screw (not shown) the cooperating wedges (2, 4a) slide with respect to each other, whereby the wedge portion 4a of the end portion 4 is displaced along the second wedge of the sensor carrier 2. This displacement of the cooperating wedges increases the overall diameter of each end portion 4 which engages and clamps the monitoring device 1 onto the inner surface of the monitored tubular structure.

The middle portion 5 of the sensor carrier 2, which spans between the two end portions 4, is of a reduced thickness 7 with respect to the declined end portions 3. Centrally located above and below the middle portion 5 of the sensor carrier 2 are two sensor locations 8 which are required for two optical strain devices.

Figure 2 shows a side view of the structural monitoring device 1 along with its associated end portions 4. Typically, there are four sets of cooperating clamping wedges within each end portion 4.

Figure 3 shows an end face of the structural monitoring device 1 as shown in Figure 1. The four clamping wedge portions 4a are shown to be located between the supporting arms 10 of the sensor carrier 2.

The supporting arms 10 are two arms, which intersect to form a cruciform configuration. For ease of subsequent computation and to achieve efficient monitoring around the whole of the tubular structure, the two arms are preferably at 90° to each other. Located circumferentially between the two arms 10 are two adjacent clamping wedge portions 4a, which are connected together via a connecting element 11. The connecting element 11 is employed to stiffen the sensor carrier 2. Axis A-A shown extends vertically through the structural monitoring device 1 and provides the cross-sectional area intersection shown in Figure 1.

Located on the outer edge of each supporting arm 10 are fibre optic strain gauge sensors 12 which are arranged to measure two intersecting axes, whereby a first sensor along the first axis measures the upper force (compressive or tensile) whilst the bottom sensor of first axis measures the bottom force (compressive or tensile). This sensor configuration is also the same for the second monitored axis. Thereby when an external force is applied to the monitored tubular structure, one of the sensors on the axis, which is aligned with the external force, will be compressed while the other corresponding sensor will be under tension. The difference between the two sensors enables the bend within the structural monitored pipe to be determined.

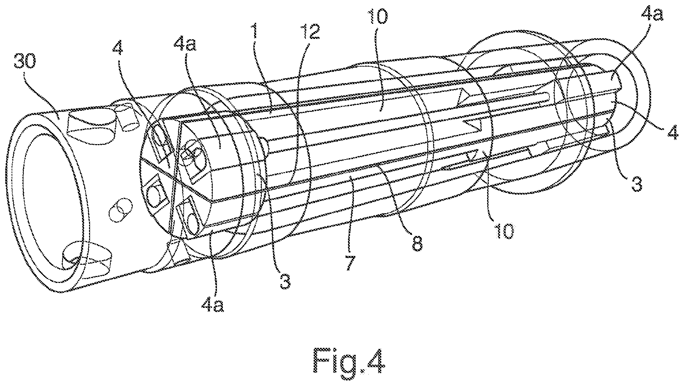

Figure 4 shows a perspective view of the structural monitoring device 1 installed within a tubular structure such as an axle 30. The supporting arms 10 are shown to be in the cruciform configuration, which is required to monitor the two axes. Between the supporting arms are located the four clamping wedge portions 4a at each end 4 of the monitoring device 1. Between each clamping wedge portions 4a the fibre optic strain gauge 12 extends along the length of the supporting arms 10 of the monitoring device 1 and the central sensor point 8 is located centrally within the fibre optic strain gauge 12 and the middle portion 5 of the device 1.

Located between the supporting arms are the connecting elements 11 which extend along the sensor carrier 2.

In use, the initial action is to ensure that the inner bore of the tube, such as an axle, into which the device is to be fitted is clean and has a smooth surface, which co-operates with the structural monitoring device. If this is not the case, the surface of the internal bore may impact on the sensitivity of the device. The apparatus is assembled with the 8 clamp wedges (four each end) which are withdrawn down the corresponding ramps.

The device is inserted into the monitored tube and rotated until it is correctly aligned with the expected external force. This requires the device to be aligned so that the foreseen major load is parallel to one of the four arms of the cruciform configuration of the device. A tool can be provided to assist in the alignment of the monitoring device which picks it up and breaks the attachment bolts to ensure the correct positioning.

Each of the four clamp locking screws is then rotated, such that the wedges move up and down the ramps to lock against the bore of the inner tube. Therefore as the wedges move up and down their corresponding ramps the overall diameter of the monitoring device is expanded to engage onto the inner wall of the monitored tube. The diametrically opposed screws are tightened and turned until the required torque is achieved. Stiff nuts or locking wire can be used to prevent the screws vibrating or loosening the wedging clamps. Care must be taken not to damage optical fibres which are connected to the optical strain gauges which are typically Fibre Bragg Gratings (FBGs).

The sensors are then subsequently connected to the fibre sensor interrogator and the system is ready for function.

The advantages of the system are:
- Providing device for monitoring the bend in a monitored tube caused by the application of loads at an angle to the tube's axis. The apparatus comprises a cruciform, which is held in place within a tube at both ends but is free there between. As the tube bends this, causes the device to bend in sympathy. Fibre optic strain sensors are placed at the edges of each arm of the device which measure the resultant strains. From this, the load, in terms of both magnitude and direction, applied to the tube can be calculated.
- The response of the strain measuring sensors can be adjusted to suit a particular application. This is achieved by adjusting the stiffness of the monitoring device (i.e. the cruciform configuration) whereby the sensitivity can be increased by stiffening the length of the apparatus either side of the strain sensors so that the bend is focused into this area. This is particularly relevant where the apparatus needs to detect small loads.

According to a further aspect of this invention the sensor is self-compensating for changes in temperature.

The monitoring device is held in place within the monitored tube by a series of clamps that use segmented wedges running on ramps to grip the monitored tubes inside bore surface. The clamp is designed such that the wedges at each end move outwards. This creates a tension force within the apparatus, which provides an effect of this force to reduce the risk of the arms of the cruciform configuration, whilst compressed, to buckle. Any buckling of the cruciform arms would result in an erroneous reading.

The use of the clamp wedges to hold or retain the sensor in place within the monitor tube allows it to be easily fitted and removed and has no impact on the rest of the monitored structure.

The structural monitoring device can be made sufficiently small to fit within small diameter axles common in use with airborne flying platforms such as helicopters or smaller fixed wing aircraft. A typical range for these diameters would be in the region of 1 to 3 inches (2.54 - 7.62 cm). The structural monitoring device uses fibre optic sensors (Fibre Bragg Gratings - FBGs) to measure the strain in the arms of the cruciform configuration within the device. By their nature these sensors are highly linear and therefore are not subject to Poisson's ratio effects. This provides a more accurate means of measuring strain and also simplifies the calibration of the device.

The use of fibre optic sensors to measure the strain in the cruciform arm configuration of the device, which by their nature are very stable over time, and unlike the equivalent resistive strain gauges, which drift with age. As the calibration remains constant and the sensors do not require to be re-calibrated during their life cycle or the life cycle of the device.

The monitoring device uses fibre optic sensors to measure the strain in the arms of the cruciform configuration of the device. The individual FBGs can be tuned to maximise their response to the strain by adjusting their zero load wavelengths i.e. the FBG on the cruciform lower arm experiences predominantly tension so the no load wavelength is reduced when compared to the FBG on the upper arm which is adjacent the load being applied to the tube which is predominately in compression.

### Features of the Invention

According to the applicant, are set out as follows:
1. A method for measuring the bending load applied to a cantilever tube such as a hollow axle in both the horizontal and vertical planes over an extended period of time without recalibration and over a wide temperature range. This is achieved by fitting a carrier within the hollow axle. The carrier is in the shape of a 90° cruciform and has a fibre optic sensor on the midpoint of each arm's outer edge. The sensor carrier is clamped into the axle at each end using four expanding wedges. The bending of the axle under load results in an angular deflection which the clamps transmit to the carrier. This results in a compressive strain in the fibre optic sensor opposite the point of the application of the load and in tensile strain in the sensor first in line with a point of application of the load.
2. The method according to the paragraph 1, that allows the sensor to be tuned to the required sensitivity particularly for detecting when a load is applied. This is achieved by stiffening the sensor carrier between the clamps and the fibre optic sensor. The change in angle between the clamps that is a resultant of the load on the axle is thus between a shorter length. This has a magnifying effect as it increases the apparent strain in both the tensile and compression sensors.
3. A method according to paragraph 1, that allows a sensor to be easily fitted and removed without requiring any modifications to the host structure. This is achieved by the use of four clamps at each end of the sensor carrier. Opposite wedges at each end are linked by a rod that screws into the inboard wedge operating the screw forces wedges apart and up the ramps to lock them against the axle's internal bore.

## Claims

1. A structural monitoring device (1) adapted to be locatable within a tubular structure, the monitoring device comprising a plurality of supporting arms (10) for supporting a plurality of fibre optic strain sensors (12); whereby each said supporting arm (10) is arranged to support each said fibre optic strain sensor (12) adjacent to an inner surface of the circumference of a monitored tubular structure to provide information indicative of strain sensed along a first radial axis and information indicative of strain sensed along a second radial axis, said strain information of said first and second radial axes are employed to monitor a force external to the circumference of a tubular structure **characterised in that** said plurality of supporting arms (10) further comprises a first supporting arm intersecting a second supporting arm to form a body arranged in a cruciform configuration, whereby said first supporting arm supports said plurality of fibre optic strain sensors along said first axis and said second supporting arms supports said plurality of optic strain sensors along said second axis; and wherein said first arm further comprises a first said fibre optic sensor at one end and a second fibre optic sensor at a second end; and said second arm further comprises a third said fibre optic sensor at one end and a fourth said fibre optic sensor at a second end.

2. A device (1) according to Claim 1 wherein each said fibre optic strain sensor is supported parallel to an inner surface of the circumference of a monitored tubular structure.

3. A device (1) according to any of the preceding claims, wherein each said supporting arm (10) is of an elongate configuration, which in use extends along the inner bore of a monitored tubular structure.

4. A device (1) according to any of the preceding claims wherein said plurality of supporting arms (10) is formed from a flexible material.

5. A device (1) according to any of the preceding claims, each said fibre optic sensor is of an elongate configuration, which in use extends along the inner bore of a monitored tubular structure.

6. A device (1) according to any of the preceding claims wherein said plurality of fibre optic strain sensors (12) is a plurality of Fibre Bragg Gratings (FBG) optical sensors.

7. A device (1) according to claim 6, wherein said FBG optical sensor (12) further comprises a tuneable adjustment means for varying the relationship between the change of wavelength and the strain applied to the tubular structure.

8. A device (1) according to any of the preceding claims, further comprising a plurality of stiffening members for stiffening said plurality of supporting arms (10), whereby a first and second stiffening body are arranged either side of each said supporting arm (10).

9. A device (1) according to any of the preceding claims, further comprising a plurality of clamping members for attaching said plurality of supporting arms (10) to the inside surface of a monitored tubular structure.

10. A device (1) according to claim 9, wherein each said clamping member further comprises cooperating wedges, which when adjusted expand outwards.

11. A device (1) according to any of the preceding claims, further comprising an outside diameter within the range of 1 to 3 inches (2.54 - 7.62 cm).

12. A tubular structure comprising a structural monitoring device (1) according to any one of claims 1 to 11.

13. A method of structural monitoring of a tubular structure **characterised by** providing a structural monitoring device (1) according to any of the claims 1 to 12 and supporting a plurality of fibre optic strain sensors (12) via a plurality of supporting arms (10) whereby each said fibre optic strain sensor (12) is parallel to an inner surface of a monitored tubular structure; and providing information indicative of strain sensed along a first axis and information indicative of strain sensed along a second axis.

14. A method according to claim 13, further comprising the step of attaching a tool to said device (1) for aligning said device (1) within a monitored tubular structure.

15. A method according to either of claims 13 or 14, further comprising the step of positioning said device (1) so that a said optic strain sensor is aligned to be parallel to load applied to a monitored tubular structure.

## Patentansprüche

1. Strukturüberwachungsvorrichtung (1), ausgelegt, um innerhalb einer röhrenförmigen Struktur angeordnet werden zu können, die Überwachungsvorrichtung umfassend eine Mehrzahl von Haltearmen (10) zum Halten einer Mehrzahl von faseroptischen Dehnungssensoren (12); wobei jeder Haltearm (10) so angeordnet ist, dass jeder faseroptische Dehnungssensor (12) benachbart zu einer inneren Oberfläche des Umfangs einer überwachten röhrenförmigen Struktur gehalten wird, um Informationen bereitzustellen, die Auskunft über eine Dehnung entlang einer ersten radialen Achse geben, und Informationen, die Auskunft über eine Dehnung entlang einer zweiten radialen Achse geben, wobei die Dehnungsinformationen der ersten und der zweiten radialen Achsen zur Überwachung einer Kraft außerhalb des Umfangs einer röhrenförmigen Struktur genutzt werden, **dadurch gekennzeichnet, dass** die Mehrzahl von Haltearmen (10) des Weiteren einen erster Haltearm umfasst, der einen zweiten Haltearm schneidet, um einen in einer kreuzförmigen Konfiguration angeordneten Körper zu bilden, wobei der erste Haltearm die Mehrzahl von faseroptischen Dehnungssensoren entlang der ersten Achse hält und der zweite Haltearm die Mehrzahl von faseroptischen Dehnungssensoren entlang der zweiten Achse hält; und wobei der erste Arm des Weiteren einen ersten faseroptischen Sensor an einem Ende und einem zweiten faseroptischen Sensor an einem zweiten Ende umfasst; und der zweite Arm des Weiteren einen dritten faseroptischen Sensor an einem Ende und einen vierten faseroptischen Sensor an einem zweiten Ende umfasst.

2. Vorrichtung (1) gemäß Anspruch 1, wobei jeder faseroptische Dehnungssensor parallel zu einer inneren Oberfläche des Umfangs einer überwachten röhrenförmigen Struktur gehalten wird.

3. Vorrichtung (1) gemäß einem der vorstehenden Ansprüche, wobei jeder Haltearm (10) eine längliche Konfiguration aufweist, die sich im Gebrauch entlang der inneren Bohrung einer überwachten röhrenförmigen Struktur erstreckt.

4. Vorrichtung (1) gemäß einem der vorstehenden Ansprüche, wobei die Mehrzahl von Haltearmen (10) aus einem flexiblen Material gebildet ist.

5. Vorrichtung (1) gemäß einem der vorstehenden Ansprüche, wobei jeder faseroptische Sensor eine längliche Konfiguration aufweist, die sich im Gebrauch entlang der inneren Bohrung einer überwachten röhrenförmigen Struktur erstreckt.

6. Vorrichtung (1) gemäß einem der vorstehenden Ansprüche, wobei es sich bei der Mehrzahl von faseroptischen Dehnungssensoren (12) um eine Mehrzahl von optischen Sensoren des Typs Faser-Bragg-Gitter (FBG) handelt.

7. Vorrichtung (1) gemäß Anspruch 6, wobei der optischer FBG-Sensor (12) des Weiteren eine abstimmbare Anpassungseinrichtung umfasst, die dem Verändern der Beziehung zwischen der Änderung der Wellenlänge und der auf die röhrenförmige Struktur einwirkende Dehnung dient.

8. Vorrichtung (1) gemäß einem der vorstehenden Ansprüche, des Weiteren umfassend eine Mehrzahl von Versteifungselementen zum Versteifen der Mehrzahl von Haltearmen (10), wobei ein erstes und zweites Versteifungselement an jeder Seite von jedem Haltearm (10) angeordnet sind.

9. Vorrichtung (1) gemäß einem der vorstehenden Ansprüche, des Weiteren umfassend eine Mehrzahl von Klemmelementen zum Befestigung der Mehrzahl von Haltearmen (10) an der inneren Oberfläche einer überwachten röhrenförmigen Struktur.

10. Vorrichtung (1) gemäß Anspruch 9, wobei jedes Klemmelement des Weiteren zusammenwirkende Keile umfasst, die beim Anpassen nach außen expandieren.

11. Vorrichtung (1) gemäß einem der vorstehenden Ansprüche, des Weiteren umfassend einen Außendurchmesser im Bereich von 1 bis 3 Zoll (2,54 - 7,62 cm).

12. Röhrenförmige Struktur, umfassend eine Strukturüberwachungsvorrichtung (1) gemäß einem der Ansprüche 1 bis 11.

13. Verfahren zur Strukturüberwachung einer röhrenförmigen Struktur, **dadurch gekennzeichnet, dass** das Verfahren die folgenden Schritte umfasst: das Bereitstellen einer Strukturüberwachungsvorrichtung (1) gemäß einem der Ansprüche 1 bis 12 und das Halten einer Mehrzahl von faseroptischen Dehnungssensoren (12) mithilfe einer Mehrzahl von Haltearmen (10), wodurch jeder faseroptische Dehnungssensor (12) parallel zu einer inneren Oberfläche einer überwachten röhrenförmigen Struktur angeordnet ist; und das Bereitstellen von Informationen, die Auskunft über eine Dehnung geben, die entlang einer ersten Achse erfasst wird, und Informationen, die Auskunft über eine Dehnung geben, die entlang einer zweiten Achse erfasst wird.

14. Verfahren gemäß Anspruch 13, des Weiteren umfassend den Schritt des Befestigens eines Werkzeugs an der Vorrichtung (1), um die Vorrichtung (1) innerhalb einer überwachten röhrenförmigen Struktur auszurichten.

15. Verfahren gemäß einem der Ansprüche 13 oder 14, des Weiteren umfassend den Schritt des Positionierens der Vorrichtung (1), so dass ein optischer Dehnungssensor so ausgerichtet ist, dass er parallel zur Last ist, die auf eine überwachte röhrenförmige Struktur einwirkt.

## Revendications

1. Un dispositif de surveillance structurelle (1) conçu pour pouvoir être positionné à l'intérieur d'une structure tubulaire, le dispositif de surveillance comprenant une pluralité de bras de support (10) pour supporter une pluralité de capteurs de déformation à fibre optique (12) ; chaque dit bras de support (10) étant agencé pour supporter chaque dit capteur de déformation à fibre optique (12) de manière adjacente à une surface interne de la circonférence d'une structure tubulaire surveillée pour fournir des informations indiquant une déformation détectée le long d'un premier axe radial et des informations indiquant une déformation détectée le long d'un deuxième axe radial, lesdites informations de déformation desdits premier et deuxième axes radiaux étant utilisées pour surveiller une force externe à la circonférence d'une structure tubulaire **caractérisé en ce que** ladite pluralité de bras de support (10) comprend en outre un premier bras de support croisant un deuxième bras de support pour former un corps agencé dans une configuration cruciforme, ledit premier bras de support supportant ladite pluralité de capteurs de déformation à fibre optique le long dudit premier axe et lesdits deuxièmes bras de support supportant ladite pluralité de capteurs de déformation optique le long dudit deuxième axe ; et où ledit premier bras comprend en outre un premier capteur à fibre optique à une extrémité et un deuxième capteur à fibre optique à une deuxième extrémité ; et ledit deuxième bras comprend en outre un troisième dit capteur à fibre optique à une extrémité et un quatrième dit capteur à fibre optique à une deuxième extrémité.

2. Un dispositif (1) selon la revendication 1 où chaque dit capteur de déformation à fibre optique est supporté parallèlement à une surface interne de la circonférence d'une structure tubulaire surveillée.

3. Un dispositif (1) selon n'importe lesquelles des revendications précédentes, où chaque dit bras de support (10) est d'une configuration allongée, qui lors de l'utilisation s'étend le long de l'alésage interne d'une structure tubulaire surveillée.

4. Un dispositif (1) selon n'importe lesquelles des revendications précédentes où ladite pluralité de bras de support (10) est formée à partir d'un matériau flexible.

5. Un dispositif (1) selon n'importe lesquelles des revendications précédentes, chaque dit bras de support étant d'une configuration allongée, qui lors de l'utilisation s'étend le long de l'alésage interne d'une structure tubulaire surveillée.

6. Un dispositif (1) selon n'importe lesquelles des revendications précédentes où ladite pluralité de capteurs de déformation à fibre optique (12) est une pluralité de capteurs optiques à réseau de Bragg sur fibre (FBG).

7. Un dispositif (1) selon la revendication 6, où ledit capteur optique FBG (12) comprend en outre un moyen d'ajustement accordable pour faire varier la relation entre le changement de longueur d'onde et appliqué à la structure tubulaire.

8. Un dispositif (1) selon n'importe lesquelles des revendications précédentes, comprenant en outre une pluralité d'éléments de raidissement pour raidir ladite pluralité de bras de support (10), un premier et un deuxième corps de raidissement étant agencés de part et d'autre de chaque dit bras de support (10).

9. Un dispositif (1) selon n'importe lesquelles des revendications précédentes, comprenant en outre une pluralité d'éléments de serrage pour attacher ladite pluralité de bras de support (10) à la surface intérieure d'une structure tubulaire surveillée.

10. Un dispositif (1) selon la revendication 9, où chaque dit élément de serrage comprend en outre des coins coopérants, qui lorsqu'ils sont ajustés s'étendent vers l'extérieur.

11. Un dispositif (1) selon n'importe lesquelles des revendications précédentes, comprenant en outre un diamètre extérieur dans la fourchette allant de 1 à 3 pouces (2,54 - 7,62 cm).

12. Une structure tubulaire comprenant un dispositif de surveillance structurelle (1) selon l'une quelconque des revendications 1 à 11.

13. Un procédé de surveillance structurelle d'une structure tubulaire **caractérisé par** la fourniture d'un dispositif de surveillance structurelle (1) selon n'importe lesquelles des revendications 1 à 12 et supportant une pluralité de capteurs de déformation à fibre optique (12) via une pluralité de bras de support (10), chaque dit capteur de déformation à fibre optique (12) étant parallèle à une surface interne d'une structure tubulaire surveillée ; et la fourniture d'informations indiquant une déformation détectée le long d'un premier axe et des informations indiquant une déformation détectée le long d'un deuxième axe.

14. Un procédé selon la revendication 13, comprenant en outre l'étape consistant à attacher un outil audit dispositif (1) pour aligner ledit dispositif (1) à l'intérieur d'une structure tubulaire surveillée.

15. Un procédé selon l'une ou l'autre des revendications 13 ou 14, comprenant en outre l'étape consistant à positionner ledit dispositif (1) de sorte qu'un dit capteur de déformation optique soit aligné pour être parallèle à une charge appliquée à une structure tubulaire surveillée.
